# EUROPÄISCHE PATENTANMELDUNG

(11) **EP 1 632 826 A2**
(43) Veröffentlichungstag der Anmeldung: **08.03.2006**
(21) Anmeldenummer: 05016833.5
(22) Anmeldetag: 03.08.2005
(51) Int. Cl.: G05D 23/13, F01P 7/16

(54) **Thermostatventil**

(30) Priorität: 03.09.2004 DE 102004042721
(71) Anmelder: Gustav Wahler GmbH u. Co.KG, 73730 Esslingen (DE)
(72) Erfinder: Gebauer, Markus, 70563 Stuttgart (DE)
(74) Vertreter: Kratzsch, Volkhard

(57) **Zusammenfassung**

Die Erfindung betrifft ein Thermostatventil (10) zur Regelung der Temperatur des Kühlmittels einer Brennkraftmaschine, das den Kühlmittelfluss von der Brennkraftmaschine durch einen Bypass und/oder Wärmeaustauscher zurück zur Brennkraftmaschine regelt, mit einem Hauptventil (5) und einem Kurzschlussventil (6) sowie einem thermostatischen Betätigungselement (20) für diese. Das Hauptventil (5) hat einen Ventilkörper (22), der eine mit einer Ventilsitzfläche (24) des Ventilgehäuses (12) zusammenwirkende Steuerfläche (23) aufweist und vom Betätigungselement (20) betätigbar ist. Dem Hauptventil (5) ist ein Steuerventil (30) zugeordnet, mittels dessen ein zusätzlicher Durchlass (31) im Hauptventil (5) derart steuerbar ist, dass bei geschlossenem Hauptventil (5) auch der zusätzliche Durchlass (31) geschlossen ist und dass beim Öffnen des Hauptventils (5) der zusätzliche Durchlass (31) im Hauptventil (5) freigegeben und dadurch der Durchlassquerschnitt des Hauptventils (5) vergrößert wird (Fig. 2).

## Beschreibung

Die Erfindung bezieht sich auf ein Thermostatventil zur Regelung der Temperatur des Kühlmittels einer Brennkraftmaschine, insbesondere eines Kraftfahrzeugmotors, der im Oberbegriff des Anspruchs 1 genannten Art.

Bei bekannten Thermostatventilen dieser Art mit Hauptventil und Kurzschlussventil ergibt sich beim Öffnen des Hauptventils aufgrund anfänglich nur geringen Volumenstromes und hohen Gegendrucks ein Druckverlust.

Der Erfindung liegt die Aufgabe zugrunde, ein Thermostatventil der eingangs genannten Art zu schaffen, bei dem der Druckverlust beim Öffnen des Hauptventils zumindest reduziert ist.

Die Aufgabe ist bei einem Thermostatventil der eingangs genannten Art gemäß der Erfindung durch die Merkmale im Anspruch 1 gelöst. Dadurch, dass dem Hauptventil ein Steuerventil zugeordnet ist, mittels dessen ein zusätzlicher Durchlass im Hauptventil derart steuerbar ist, dass bei geschlossenem Hauptventil auch der zusätzliche Durchlass geschlossen ist und dass beim Öffnen des Hauptventils der zusätzliche Durchlass des Hauptventils freigegeben und dadurch der Durchlassquerschnitt des Hauptventils vergrößert wird, ist eine Optimierung des Durchflusses erreicht. Beim Ansprechen des Hauptventils, das als Kühlerventil wirksam ist, wird beim Öffnen des Ventilkörpers aufgrund des Steuerventils der mindestens eine zusätzliche Durchlass im Hauptventil freigegeben mit der Konsequenz eines größeren Volumenstroms und eines reduzierten Gegendrucks hinsichtlich des durchströmenden Kühlmittels, wodurch der Druckverlust des Thermostatventils reduziert und eine Durchflussoptimierung erreicht ist. Bei allem ist das Thermostatventil einfach, betriebssicher und kostengünstig, da sich eine einfache und kostengünstige Bauweise bei Einsatz nur weniger Bauteile ergibt.

Weitere besondere Erfindungsmerkmale und vorteilhafte Weiterbildungen des Thermostatventils ergeben sich aus den Unteransprüchen.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen
- Fig. 1: eine schematische Seitenansicht eines Thermostatventils gemäß einem ersten Ausführungsbeispiel,
- Fig. 2: eine schematische Seitenansicht mit teilweisem axialem Längsschnitt des Thermostatventils in Fig. 1,
- Fig. 3: eine schematische, durch Weglassung von Teilen vereinfachte perspektivische Ansicht des zum Teil aufgeschnittenen Thermostatventils in Fig. 1 und 2,
- Fig. 4: eine schematische Seitenansicht eines Thermostatventils gemäß einem zweiten Ausführungsbeispiel,
- Fig. 5: eine schematische Seitenansicht mit teilweisem axialem Längsschnitt des Thermostatventils in Fig. 4,
- Fig. 6: eine schematische, durch Weglassung von Teilen vereinfachte perspektivische Ansicht des zum Teil aufgeschnittenen Thermostatventils in Fig. 4 und 5.

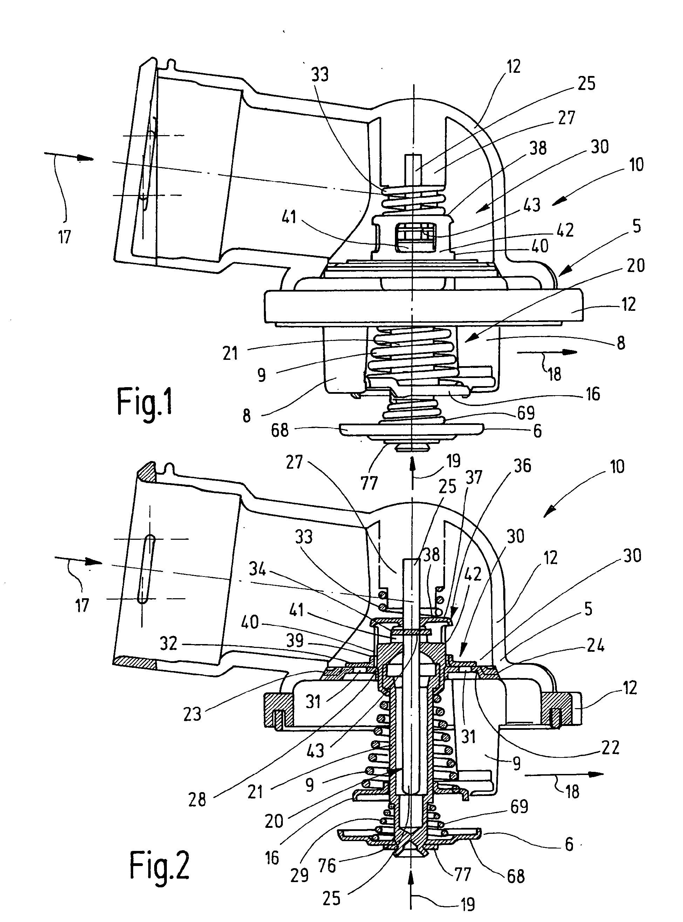

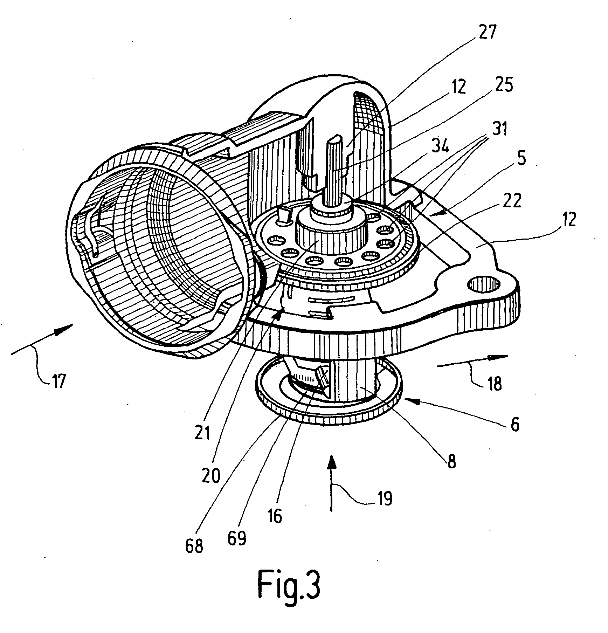

Das in Fig. 1 bis 3 gezeigte Thermostatventil 10 gemäß dem ersten Ausführungsbeispiel dient zur Regelung der Temperatur des Kühlmittels, insbesondere der Kühlflüssigkeit, einer nicht weiter gezeigten Brennkraftmaschine, insbesondere eines Kraftfahrzeugmotors. Es regelt den Kühlmittelfluss von der Brennkraftmaschine durch einen Bypass und/oder durch einen Wärmeaustauscher, insbesondere einen Kühler, zurück zur Brennkraftmaschine.

Das Thermostatventil 10 ist in der gezeigten Gestaltung einbaufertig und kann in dieser Form in ein nicht weiter gezeigtes Ventilgehäuse eingebaut werden, das in der Regel in einem unteren Teil eine Bypass-Ventildurchflussöffnung aufweist. Das Thermostatventil 10 wird im nicht gezeigten Ventilgehäuse z.B. so aufgenommen, dass das Kühlmittel z.B. gemäß Pfeil 18 über einen dortigen, nicht gezeigten Kanal abgeführt wird und je nach Stellung des Thermostatventils 10 entweder über einen nicht gezeigten Kanal gemäß Pfeil 17 von einem nicht gezeigten Wärmeaustauscher, insbesondere Kühler, und/oder gemäß Pfeil 19 durch einen nicht gezeigten Bypass von der Brennkraftmaschine zugeführt wird. Es versteht sich, dass entsprechend den Gegebenheiten auch eine andere Führung des Kühlmittels im Rahmen der Erfindung liegt.

Das Thermostatventil 10 weist ein thermostatisches Betätigungselement 20 auf, dessen Gehäuse 21 einen sich bei Erwärmung ausdehnenden Dehnstoff, z.B. Wachs, enthält. In den Dehnstoff im Gehäuse 21 taucht ein dazu koaxialer Kolben 25 ein, der oben aus dem Gehäuse 21 herausgeführt und mittels eines Widerlagers 27 axial abgestützt ist.

Das Thermostatventil 10 vereinigt in sich ein Hauptventil 5 und ein Kurzschlussventil 6, von denen das Hauptventil 5 den Ventildurchgang vom Pfeil 17 zum Pfeil 18 steuert. Das Kurzschlussventil 6 steuert den Bypassdurchgang vom Pfeil 19 zum Pfeil 18. Das Hauptventil 5 ist in üblicher Weise gestaltet. Es weist einen z.B. tellerförmigen Ventilkörper 22 auf, der eine Ventildurchflussöffnung mit ringförmiger Ventilsitzfläche 24 verschließt oder je nach Stellung mehr oder weniger freigibt. Der tellerförmige Ventilkörper 22 liegt axial an einem Anschlag 28, z.B. einer Schulter des Gehäuses 21, an und ist mittels einer Feder 9 in Schließrichtung belastet, die einerseits am Gehäuse 21 und andererseits an einem Widerlager abgestützt ist, z.B. mittels mehreren Bügeln 8, die Bestandteil eines Ventilgehäuses 12 sind. Das Ventilgehäuse 12 ist so gestaltet, dass dieses die ringförmige Ventilsitzfläche 24 enthält, die mittels einer zugeordneten ringförmigen Steuerfläche 23 des tellerförmigen Ventilkörpers 22 geschlossen bzw. mehr oder weniger freigegeben wird.

Das ein Kühlerventil bildende Hauptventil 5 wird somit bei Erwärmung des Dehnstoffes innerhalb des Gehäuses 21 dadurch geöffnet, dass sich der Dehnstoff ausdehnt und aufgrund des unverschiebbar abgestützten Kolbens 25 sich somit das Gehäuse 21 mitsamt dem Ventilkörper 22 relativ zum Kolben 25 in der Zeichnung nach unten und gegen die Wirkung der Feder 9 verschieben kann. Sinkt die Temperatur des Kühlmittels ab, so kühlt der Dehnstoff unter Volumenverringerung ab, woraufhin die Feder 9 das Gehäuse 21 mit dem Ventilkörper 22 in gegensinniger Richtung in Schließstellung bewegen kann, in der der Ventilkörper 22 mit der Steuerfläche 23 auf der Ventilsitzfläche 24 aufsitzt und die Ventildurchflussöffnung verschließt.

Das Gehäuse 21 ist in der Zeichnung nach unten hin durch einen zylindrischen Gehäuseteil 29 verlängert, der über das Widerlager 16 hinausragt und nach unten vorsteht. Auf diesem Gehäuseteil 29 ist unverlierbar und gegen die Wirkung einer Feder 69 relativverschiebbar ein Ventilglied 68 gehalten, das zur Steuerung der Bypass-Ventilöffnung dient und z.B. als Ventilplatte 75 ausgebildet ist. Das Ventilglied 68 weist eine vorzugsweise zentrale Öffnung 76 auf, die vom Gehäuseteil 29 je nach Ventilposition durchsetzbar ist. Die Feder 69 ist am Ventilglied 68 und am Gehäuse 21 abgestützt. Am Ende des Gehäuseteils 29 ist unverlierbar eine Scheibe 77 gehalten, gegen die das Ventilglied 68 mittels der Feder 69 angedrückt ist. Das Ventilglied 68 mit zugeordneter Feder 69 bildet das Kurzschlussventil 6. In der nicht gezeigten Schließstellung des Kurzschlussventils 6 sitzt dessen Ventilglied 68 auf einer zugeordneten, nicht gezeigten Sitzfläche eines Gehäuseteils auf, wodurch eine Bypass-Ventildurchflussöffnung verschlossen ist. Das Ventilglied 68 wird mittels der Feder 69 dabei gegen die genannte Sitzfläche angedrückt. Im dargestellten geschlossenen Zustand des Hauptventils 5 ist in der Regel das Kurzschlussventil 6 geöffnet, so dass das Kühlmittel im Kurzschluss von der Brennkraftmaschine gemäß Pfeil 19 durch die nicht gezeigte Bypassöffnung und das Thermostatventil 10 in Richtung des Pfeiles 18 zurück zur Brennkraftmaschine geführt wird.

Dem Hauptventil 5 ist ein besonderes Steuerventil 30 zugeordnet, mittels dessen ein zusätzlicher Durchlass im Hauptventil 5 derart steuerbar ist, dass bei geschlossenem Hauptventil (Fig. 2) auch der zusätzliche Durchlass geschlossen ist und dass beim Öffnen des Hauptventils 5 durch Verschiebung in Fig. 2 nach unten der zusätzliche Durchlass im Hauptventil 5 freigegeben wird und dadurch der Durchlassquerschnitt des Hauptventils 5 vergrößert wird. Dies hat den Vorteil einer Durchflussoptimierung. Ausgehend von einem geschlossenen Hauptventil 5 erfolgt bei Erwärmung des Dehnstoffs in geringem Umfang zunächst eine Verschiebung des Ventilkörpers 22 in Öffnungsrichtung, die hinsichtlich des Steuerventils 30 noch ohne Wirkung ist. Beim weiteren Öffnen des Ventilkörpers 52 hingegen wird der zusätzliche Durchlass frei. Dies führt dazu, dass durch Schaffen zusätzlicher Durchlassquerschnitte im Bereich des Hauptventils 5 ein Druckverlust des Thermostatventils reduziert wird. Der hindurchgehende Volumenstrom wird erhöht, wobei ein der Durchströmung entgegenwirkender Gegendruck zugleich verringert ist.

Der zusätzliche Durchlass ist im Ventilkörper 22 des Hauptventils 5 gebildet, und zwar durch mindestens eine dort vorgesehene Durchlassöffnung 31. Beim Ausführungsbeispiel gemäß Fig. 1 bis 3 hat der Ventilkörper 22 mehrere, nämlich eine Vielzahl von in Umfang verteilten, vorzugsweise aufeinanderfolgenden, Durchlassöffnungen 31. Diese sind generell als fensterartige Durchbrüche des Ventilkörpers 22 gestaltet, wobei beim gezeigten ersten Ausführungsbeispiel die Durchlassöffnungen 31 aus kreisförmigen Durchbrechungen gebildet sind. Statt kreisförmiger Durchbrechungen können als Durchlassöffnungen 31 auch schlitzförmige Durchbrechungen oder Durchbrechungen mit sonstigen geeigneten Konturen vorgesehen sein.

Das Steuerventil 30 weist mindestens einen Steuerkörper 32 auf, der die mindestens eine Durchlassöffnung 31 bei geschlossenem Hauptventil 5 verschließt und beim Öffnen des Hauptventils 5 freigibt. Der mindestens eine Steuerkörper 32 ist in der in Fig. 2 gezeigten Schließstellung des Hauptventils 5 mit einer Schließkraft zum Verschluss der mindestens einen Durchlassöffnung 31 an den Ventilkörper 22 des Hauptventils 5 angedrückt. Die Schließkraft wird durch eine Federkraft erzeugt. Die auf den mindestens einen Steuerkörper 32 arbeitende Schließkraft ist in Öffnungsrichtung des Hauptventils 5, d.h. entgegen dem Pfeil 19, gerichtet. Diese Federkraft wird von einer Feder 33 erzeugt, von der der mindestens eine Steuerkörper 32 beaufschlagt ist. Die Feder 33 ist einerseits am Ventilgehäuse 12, und zwar in der Nähe des Widerlagers 27, und andererseits am Steuerkörper 32 abgestützt.

Der mindestens eine Steuerkörper 32 des Steuerventils 30 ist nach Öffnen des Hauptventils 5 mittels Anschlagmitteln 34 an einer Bewegung in Öffnungsrichtung des Hauptventils 5, somit entgegen dem Pfeil 19, gehindert. Die Anschlagmittel 34 sind beim ersten Ausführungsbeispiel an einem Teil des Betätigungselements 20 vorgesehen, und zwar beim gezeigten Ausführungsbeispiel an dessen unverschiebbar abgestütztem Kolben 25. Der Kolben 25 trägt hierzu als Anschlagmittel 34 z.B. eine daran feste Scheibe, einen Querstift od. dgl. radial abstrebende Anschläge 43.

Der mindestens eine Steuerkörper 32 des Steuerventils 30 ist über Führungsmittel relativ zum Betätigungselement 20 verschiebbar geführt. Der Steuerkörper 32 ist daher in Bezug auf das Betätigungselement 20 so weit axial verschiebbar, bis der Steuerkörper 32 am Anschlag 43 anschlägt. Der mindestens eine Steuerkörper 32 ist an einer Haltevorrichtung 36 gehalten, die einen Halter 37 aufweist, der relativ zum Kolben 25 des Betätigungselements 20 verschiebbar ist. Der Halter 37 ist mit der Schließkraft, insbesondere Federkraft, die von der Feder 33 aufgebracht wird, beaufschlagt, derart, dass der Steuerkörper 32 in der in Fig. 2 gezeigten Schließstellung des Hauptventils 5 von oben her auf den Ventilkörper 22 gedrückt und dadurch das Steuerventil 30 in Schließstellung gehalten ist. Beim Öffnen des Hauptventils 5 folgt zunächst der Steuerkörper 32 unter Beibehaltung der Schließstellung des Steuerventils 30, bis die Haltevorrichtung 36 unter der Wirkung der Feder 33 gegen die Anschlagmittel 34, insbesondere den mindestens einen Anschlag 43, am Kolben 25 gedrückt wird.

Der Halter 37 der Haltevorrichtung 36 besteht z.B. aus einem Teller 38, der auf dem Kolben 25 sitzt und dazu verschiebbar ist. Die Haltevorrichtung 36 weist ein Tragteil 40 auf, welches den mindestens einen Steuerkörper 32 mit dem Halter 37 verbindet. Dieser Tragteil 40 ist aus einer Hülse 42 gebildet, die in der Hülsenwandung Öffnungen 41 enthält. Statt dessen kann der Tragteil 40 auch aus einzelnen Verbindungsarmen gebildet sein, die sich zwischen dem Teller 38 und dem Steuerkörper 32 erstrecken und beide miteinander verbinden. Der Tragteil 40 ist zusammen mit dem Teller 38 und dem Steuerkörper 32 z.B. zu einem einstückigen Bauteil vereinigt und auf dem Gehäuse 21 des Betätigungselements 20 relativ verschiebbar geführt. Wie insbesondere Fig. 2 erkennen lässt, ist auch der Steuerkörper 32 des Steuerventils 30 als Teller ausgebildet, der flach auf der Oberseite des tellerförmigen Ventilkörpers 22 aufsitzt. Der so gestaltete Ventilkörper 32 ist mehreren zusätzlichen Durchlässen in Form der Durchlassöffnungen 31 zu deren gemeinsamer Steuerung zugeordnet. Dadurch, dass der Ventilkörper 22 des Hauptventils 5 als Ventilteller ausgebildet ist, lassen sich darin die Durchlassöffnungen 31 einfach und kostengünstig unterbringen. In der Schließstellung gemäß Fig. 2 ist der Steuerkörper 32 in Form eines Tellers in Öffnungsrichtung des Ventilkörpers 22 an diesen angedrückt. Der Steuerkörper 32 und/oder der Ventilkörper 22 können in dieser Schließstellung mittels nicht weiter gezeigten Dichtungsmitteln, z.B. einer Gummidichtung, abgedichtet sein.

Wird ausgehend vom geschlossenen Zustand des Hauptventils 5 dieses z.B. zunächst geringfügig geöffnet durch Verschiebung des Gehäuses 21 mitsamt des Ventilkörpers 22 gegen die Wirkung der Feder 9 in Fig. 2 nach unten, so folgt der Steuerkörper 32 dieser Bewegung zunächst, wobei der Steuerkörper 32 nach wie vor über die Feder 33 flächig und unter Verschluss der Durchlassöffnungen 31 an den tellerförmigen Ventilkörper 22 von oben her angedrückt ist. Bewegt sich der Ventilkörper 22 weiter in Öffnungsstellung, so wird der Steuerkörper 32 dann an einer entsprechenden Folgebewegung gehindert, sobald der Halter 37 am Anschlagmittel 34, insbesondere Anschlag 43, von oben her axial anschlägt und dann an einer weiteren Bewegung gegensinnig zum Pfeil 19 dadurch gehindert ist. Bewegt sich der Ventilkörper 22 dann weiterhin in Öffnungsrichtung, so hebt der Ventilkörper 22 vom Steuerkörper 32 ab, wodurch der Durchlass durch die Durchlassöffnungen 31 freigegeben wird. Dadurch wird der vom Ventilkörper 22 gesteuerte Volumenstrom erhöht. Der Druckverlust wird wegen geringerem Gegendruck reduziert. Auf diese Weise ist eine Durchflussoptimierung beim Öffnen des Hauptventils 5 erreicht.

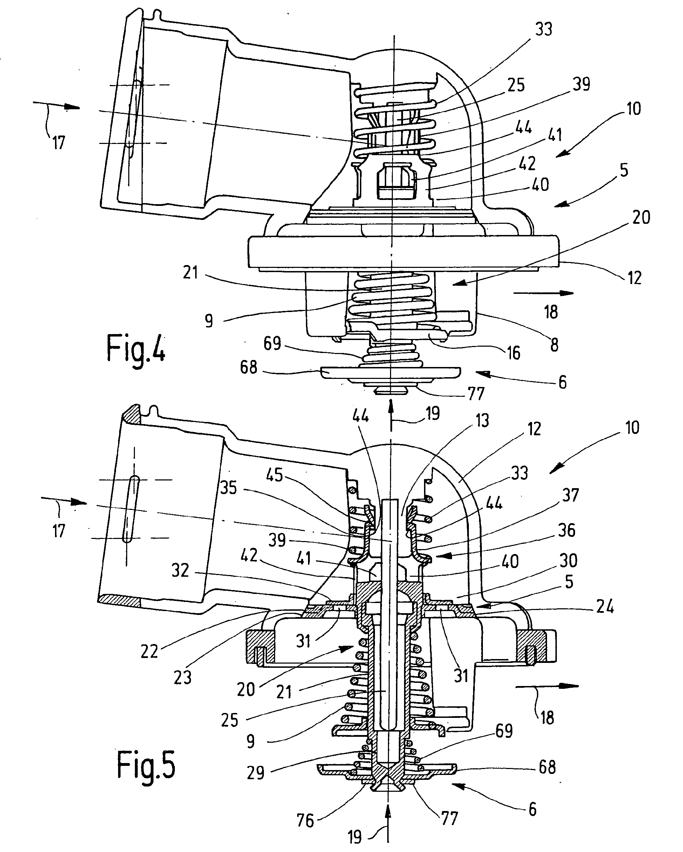

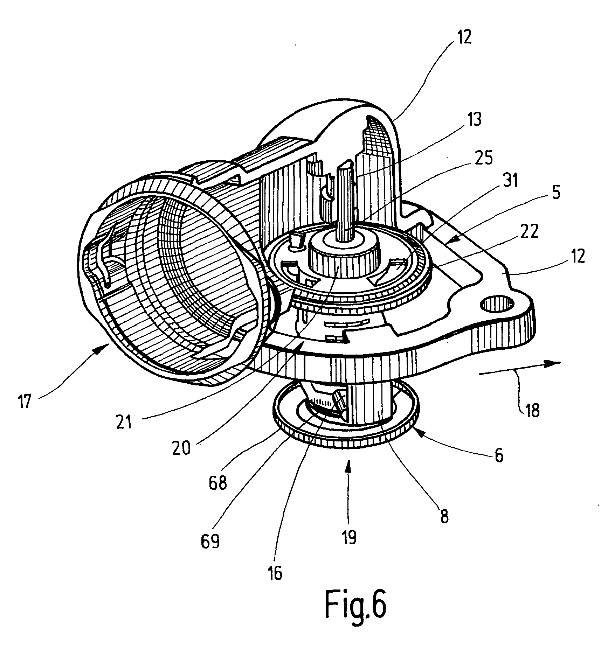

Bei dem in Fig. 4 bis 6 gezeigten zweiten Ausführungsbeispiel sind für die Teile, die dem ersten Ausführungsbeispiel entsprechen, gleiche Bezugszeichen verwendet. Beim zweiten Ausführungsbeispiel sind die Durchlassöffnungen 31 als etwa fensterartige Durchbrüche im Ventilkörper 22 gebildet. Der mindestens eine Steuerkörper 32 des Steuerventils 30 ist nach Öffnen des Hauptventils 5 mittels Anschlagmitteln 35 an einer Folgebewegung in Öffnungsrichtung des Hauptventils 5 gehindert, wobei diese Anschlagmittel 35 an einem Gehäuseteil 13 des Ventilgehäuses 12 vorgesehen sind, der zugleich das Widerlager 27 für den Kolben 25 bildet. Bei diesem Ausführungsbeispiel ist der mindestens eine Steuerkörper 32 mit Hilfe von Führungsmitteln relativ zum Ventilgehäuse 12 verschiebbar geführt, und zwar auf diesem Gehäuseteil 13. Der Steuerkörper 32 sitzt an einer Haltevorrichtung 36, die einen Halter 37 aufweist, der hier etwa hülsenartig gestaltet ist und mit der von der Feder 33 aufgebrachten Schließkraft beaufschlagt ist. Dieser hülsenförmige Halter 37 ist beim Öffnen des Hauptventils 5 unter der Wirkung dieser Schließkraft gegen die Anschlagmittel 35 am Ventilgehäuse 12, 13 drückbar. Die Anschlagmittel 35 bestehen hier aus einem Ringvorsprung 44 des Gehäuseteils 13, an dem mindestens ein radial nach innen gerichteter Vorsprung 45 des hülsenförmigen Halters 37 bei der axialen Verschiebebewegung anschlagen kann. Der hülsenförmige Halter 37 ist hier als verschiebbare Muffe 39 gestaltet, die den Gehäuseteil 13 umfasst und darauf zentriert und verschiebbar ist. Die Wirkungsweise des Thermostatventils 10 in Fig. 4 bis 6 ist die gleiche wie vorstehend zum ersten Ausführungsbeispiel beschrieben worden ist.

Bei einem anderen, nicht gezeigten Ausführungsbeispiel ist das Steuerventil 30 zur Steuerung des zusätzlichen Durchlasses im Hauptventil 5 andersartig gestaltet. Z.B. können als Durchlassöffnungen 31 wiederum etwa kreisförmige Durchbrechungen im Ventilkörper 22 vorgesehen sein. Der Steuerkörper 32 weist dann für jede Durchlassöffnung ein Schließglied, z.B. in Form einer Kugel, auf, das über eine jeweilige eigene Feder und über ein allen Schließgliedern gemeinsames, z.B. tellerförmiges, Druckglied, jeweils in seiner die Durchlassöffnung 31 verschließenden Schließstellung gehalten ist.

## Patentansprüche

1. Thermostatventil (10) zur Regelung der Temperatur des Kühlmittels einer Brennkraftmaschine, insbesondere eines Kraftfahrzeugmotors, das den Kühlmittelfluss von der Brennkraftmaschine durch einen Bypass und/oder durch einen Wärmeaustauscher, insbesondere Kühler, zurück zur Brennkraftmaschine regelt, mit einem Hauptventil (5), einem Kurzschlussventil (6) und einem thermostatischen Betätigungselement (20) für letztere, wobei das Hauptventil (5) einen Ventilkörper (22) aufweist, der eine mit einer Ventilsitzfläche (24) des Ventilgehäuses (12) zusammenwirkende Steuerfläche (23) aufweist und vom Betätigungselement (20) betätigbar ist,
**dadurch gekennzeichnet,**
**dass** dem Hauptventil (5) ein Steuerventil (30) zugeordnet ist, mittels dessen ein zusätzlicher Durchlass im Hauptventil (5) derart steuerbar ist, dass bei geschlossenem Hauptventil auch der zusätzliche Durchlass geschlossen ist und dass beim Öffnen des Hauptventils (5) der zusätzliche Durchlass im Hauptventil (5) freigegeben und **dadurch** der Durchlassquerschnitt des Hauptventils (5) vergrößert wird.

2. Thermostatventil nach Anspruch 1,
**dadurch gekennzeichnet,**
**dass** der zusätzliche Durchlass durch mindestens eine Durchlassöffnung (31) im Ventilkörper (22) des Hauptventils (5) gebildet ist.

3. Thermostatventil nach Anspruch 2,
**dadurch gekennzeichnet, dass** der Ventilkörper (22) mehrere in Umfangsrichtung verteilte, z.B. aufeinanderfolgende, Durchlassöffnungen (31) aufweist.

4. Thermostatventil nach Anspruch 3,
**dadurch gekennzeichnet,**
**dass** die Durchlassöffnungen (31) aus fensterartigen Durchbrüchen des Ventilkörpers (22), z.B. aus kreisförmigen Durchbrechungen, schlitzförmigen Durchbrechungen od.dgl., gebildet sind.

5. Thermostatventil nach einem der Ansprüche 1 bis 4,
**dadurch gekennzeichnet,**
**dass** das Steuerventil (30) einen Steuerkörper (32) aufweist, der die mindestens eine Durchlassöffnung (31) bei geschlossenem Hauptventil (5) verschließt und beim Öffnen des Hauptventils (5) freigibt.

6. Thermostatventil nach Anspruch 5,
**dadurch gekennzeichnet,**
**dass** der mindestens eine Steuerkörper (32) in der Schließstellung des Hauptventils (5) mit einer Schließkraft zum Verschluss der mindestens einen Durchlassöffnung (31) an den Ventilkörper (22) des Hauptventils (5) angedrückt ist.

7. Thermostatventil nach Anspruch 6,
**dadurch gekennzeichnet,**
**dass** die Schließkraft durch eine Federkraft erzeugt ist.

8. Thermostatventil nach Anspruch 6 oder 7,
**dadurch gekennzeichnet,**
**dass** die auf den mindestens einen Steuerkörper (32) arbeitende Schließkraft in Öffnungsrichtung des Hauptventils (5) gerichtet ist.

9. Thermostatventil nach einem der Ansprüche 6 bis 8,
**dadurch gekennzeichnet,**
**dass** der mindestens eine Steuerkörper (32) von mindestens einer Feder (33) beaufschlagt ist, die die Schließkraft erzeugt und einerseits am Ventilgehäuse (12) und andererseits am Steuerkörper (32) abgestützt ist.

10. Thermostatventil nach einem der Ansprüche 1 bis 9,
**dadurch gekennzeichnet,**
**dass** der mindestens eine Steuerkörper (32) des Steuerventils (30) nach Öffnen des Hauptventils (5) mittels Anschlagmitteln (34;35) an einer Bewegung in Öffnungsrichtung des Hauptventils (5) gehindert ist.

11. Thermostatventil nach Anspruch 10,
**dadurch gekennzeichnet,**
**dass** die Anschlagmittel (34;35) an einem Teil des Betätigungselements (20), z.B. an dessen unverschiebbar abgestützten Kolben (25), oder an einem Gehäuseteil (13) des Ventilgehäuses (12) vorgesehen sind.

12. Thermostatventil nach einem der Ansprüche 1 bis 11,
**dadurch gekennzeichnet,**
**dass** der mindestens eine Steuerkörper (32) des Steuerventils (30) mittels Führungsmitteln relativ zum Betätigungselement (20) und/oder zum Ventilgehäuse (12) verschiebbar geführt ist.

13. Thermostatventil nach Anspruch 11 oder 12,
**dadurch gekennzeichnet,**
**dass** der mindestens eine Steuerkörper (32) an einer Haltevorrichtung (36) gehalten ist, die einen relativ zum unverschiebbar abgestützten Kolben (25) des Betätigungselement (20) oder relativ zum Ventilgehäuse (12) verschiebbaren Halter (37) aufweist, der mit der Schließkraft, insbesondere Federkraft, beaufschlagt ist und beim Öffnen des Hauptventils (5) unter der Wirkung dieser Schließkraft gegen die Anschlagmittel (34;35) am Kolben (25) oder am Ventilgehäuse (12,13) drückbar ist.

14. Thermostatventil nach Anspruch 13,
**dadurch gekennzeichnet,**
**dass** der Halter (37) als Teller (38) auf dem Kolben (25) oder als Muffe (39) auf einem Gehäuseteil (13) des Ventilgehäuses (12) ausgebildet ist.

15. Thermostatventil nach Anspruch 13 oder 14,
**dadurch gekennzeichnet,**
**dass** die Haltevorrichtung (36) ein Tragteil (40) aufweist, das den mindestens einen Steuerkörper (32) mit dem Halter (37) verbindet.

16. Thermostatventil nach Anspruch 15,
**dadurch gekennzeichnet,**
**dass** der Tragteil (40) aus einer mit Öffnungen (41) versehenen Hülse (42) oder aus einzelnen Verbindungsarmen gebildet ist.

17. Thermostatventil nach Anspruch 15 oder 16,
**dadurch gekennzeichnet,**
**dass** der Tragteil (40) am Gehäuse (21) des Betätigungselements (20) relativ verschiebbar geführt ist.

18. Thermostatventil nach einem der Ansprüche 1 bis 17,
**dadurch gekennzeichnet,**
**dass** der mindestens eine Steuerkörper (32) für jeden zusätzlichen Durchlass, insbesondere jede Durchlassöffnung (31), ein eigenes Schließglied aufweist, das über eine jeweilige Feder und über ein allen Schließgliedern gemeinsames, z.B. tellerförmiges, Druckglied jeweils in seiner den Durchlass verschließenden Schließstellung gehalten ist.

19. Thermostatventil nach einem der Ansprüche 1 bis 18,
**dadurch gekennzeichnet,**
**dass** der mindestens eine Steuerkörper (32) des Steuerventils (30) als Teller ausgebildet ist, der mehreren Durchlassöffnungen (31) zu deren Steuerung zugeordnet ist.

20. Thermostatventil nach einem der Ansprüche 1 bis 19,
**dadurch gekennzeichnet,**
**dass** der Ventilkörper (22) des Hauptventils (5) als Ventilteller ausgebildet ist.

21. Thermostatventil nach Anspruch 19 oder 20,
**dadurch gekennzeichnet,**
**dass** der tellerförmige Steuerkörper (32) des Steuerventils (30) bei geschlossenem Hauptventil (5) in Öffnungsrichtung des tellerförmigen Ventilkörpers (22) an letzteren angedrückt ist.

22. Thermostatventil nach einem der Ansprüche1 bis 21,
**dadurch gekennzeichnet,**
**dass** der mindestens eine Steuerkörper (32) und/oder der Ventilkörper (22) mittels Dichtungsmitteln in der Schließstellung gegeneinander abgedichtet sind.

23. Thermostatventil nach einem der Ansprüche 1 bis 22,
**dadurch gekennzeichnet,**
**dass** auf dem Gehäuse (21) des thermostatischen Betätigungselements (20) unverlierbar und gegen die Wirkung einer Feder (69) relativ verschiebbar ein Ventilglied (68) des Kurzschlussventils (6) gehalten ist, das einer Bypass-Ventildurchflussöffnung in einem Ventilgehäuseteil zugeordnet und als Ventilplatte ausgebildet ist, die eine von einem Gehäuseteil (29) des Betätigungselements (20) durchsetzbare Öffnung (76) aufweist.
